# EUROPEAN PATENT APPLICATION

(11) **EP 4 826 862 A1**
(43) Date of publication of application: **21.10.2026**
(21) Application number: 25170682.6
(22) Date of filing: 15.04.2025
(51) Int. Cl.: H01M 50/15, H01M 50/176, H02J 7/00, H01M 10/46, H01M 50/55, H01M 50/552, F21L 4/08

(54) **A ROAD SAFETY EQUIPMENT BATTERY, A CHARGER FOR A ROAD SAFETY EQUIPMENT BATTERY, A SYSTEM COMPRISING THE SAME, AND A METHOD FOR RELEASABLY FASTENING A ROAD SAFETY EQUIPMENT BATTERY IN A CHARGER**

(71) Applicant: Worxsafe AB, 831 52 Östersund (SE)
(72) Inventor: Jonsson, Seth, 167 43 Bromma (SE)
(74) Representative: AWA Sweden AB

(57) **Abstract**

There is provided a road safety equipment battery (100) which is rechargeable and configured to be charged by a charger. The road safety equipment battery (100) comprises a housing (110) having a top surface (112), a bottom surface (114), and side surfaces (116). The road safety equipment battery (100) further comprises a rechargeable cell (120) enclosed by the housing (110), a first electric terminal (130) arranged at the top surface (112), a second electric terminal (140) arranged at the top surface (112), and a recess (150) arranged at an edge portion of the top surface (112), wherein the recess (150) is configured to accommodate a corresponding protrusion of a charger (200).

## Description

### TECHNICAL FIELD

The present disclosure relates to a road safety equipment battery, a charger for a road safety equipment battery, a system comprising the same, and a method for releasably fastening a road safety equipment battery in a charger.

### TECHNICAL BACKGROUND

Road safety equipment, such as flashlights and signalling devices, plays a crucial role in ensuring the safety of road users. These devices are often deployed at remote road sites for extended periods of time, leading to substantial amounts of energy required to power this equipment at sometimes remote locations. As a result, they are typically powered by batteries, which may provide a convenient and portable energy source. However, the reliance on batteries introduces inherent time limitations due to their finite energy capacity and eventual expiration.

Accordingly, there is a continuous demand for innovative solutions that provide an efficient and sustainable energy supply for road safety equipment.

### SUMMARY

At least some of the above-mentioned drawbacks are at least partly overcome by the present disclosure according to the independent claims. Preferred embodiments are set forth in the dependent claims. In accordance with a first aspect of the present disclosure, there is provided a road safety equipment battery which is rechargeable and configured to be charged by a charger. The road safety equipment battery comprises a housing having a top surface, a bottom surface, and side surfaces. The road safety equipment battery further comprises a rechargeable cell enclosed by the housing, a first electric terminal arranged at the top surface, a second electric terminal arranged at the top surface, and a recess arranged at an edge portion of the top surface, wherein the recess is configured to accommodate a corresponding protrusion of a charger. Providing a rechargeable battery instead of a non-chargeable battery may be advantageous because the rechargeable battery can repeatedly be recharged and thus provide energy for road safety equipment for longer periods of time. In addition, by recharging a road safety equipment battery, the need to accommodate new batteries when the old ones are worn out is, if not completely reduced, at least minimized. Furthermore, the use of rechargeable batteries may reduce waste since they can be used repeatedly. This may result in fewer batteries being disposed of and thereby minimizing environmental pollution and material resources. Furthermore, the road safety equipment battery according to the present disclosure comprising a recess may provide a user to clearly distinguish it from a conventional road safety equipment battery. As of this, a user may be prevented from accidentally dispose of it in belief that is a conventional non-chargeable battery. Even further, the road safety equipment battery comprising the recess configured to accommodate a corresponding protrusion of a corresponding charger may advantageously provide it with the ability to be fitted into said charger for being recharged while a conventional non-chargeable battery, lacking said recess, will not. As of this, a user may be prevented from accidentally mounting a non-chargeable battery into said charger. This differentiation may be advantageous as the visual appearance of a road safety equipment battery according to the present disclosure and a conventional road safety equipment battery may be similar and it may be difficult for a user to notice the difference. In addition, this differentiation may be particularly advantageous as a user may be required to make a distinction between these two types of batteries at remote road sites, which sometimes may be exposed to harsh weather condition and limited lightning, which worsens the visibility conditions. The term corresponding charger may refer to a charger that is specifically designed or compatible with the road safety equipment battery. Furthermore, the road safety equipment battery of the present disclosure provides the first electric terminal, the electrical terminal, and the recess on the top surface. Thereby, the corresponding charger may be designed to provide the corresponding protrusion on the same surface as where the charging terminals are provided. This may be beneficial for enabling the protrusion to directly protect the charging terminals from being engaged by electrical terminals of an incompatible battery, which may damage the charger. As opposed to this, if the protrusion were arranged on a different surface to where the charging terminals were positioned, there may be a risk that the electric terminals of an incompatible battery could accidentally engage to the charging terminals of said charger before the protrusion would engage to said battery and prevent it from being fitted into said charger. The term charging terminals may refer to points of connection on a charger where electrical current enters a battery during the charging process. The term road safety equipment battery may refer to a battery that powers devices and equipment used to enhance safety on roads and highways. These batteries may be designed to be durable and dependable, providing a consistent power supply to critical safety equipment such as traffic lights, warning signs, road hazard markers, and emergency communication systems. The term road safety equipment battery may refer to a 6V 4R25 battery.

According to an embodiment, the first electric terminal and the second electric terminal are configured to receive electrical power from the charger and transfer the electrical power to the rechargeable cell for charging the same. Providing the first and the second electric terminals on the top surface may be advantageous for making them easily accessible for connecting and disconnecting to the charger.

According to an embodiment, each of the first electric terminal and the second electric terminal is a coil spring terminal. The first and second terminals being spring terminals may provide a secure and stable connection between the road safety equipment battery and the charger. This may be particularly important in road safety equipment where a reliable power supply is vital.

According to an embodiment, the recess extends over a portion of the top surface and a portion of one of the side surfaces. This may enhance a user's ability to easily recognise the recess and thereby better distinguish a road safety equipment battery according to the present disclosure over a conventional road safety equipment battery.

According to an embodiment, the recess is open at an edge of the top surface and extends in-between two adjacent ends of the top surface. As of this, the road safety equipment battery may be provided in a rectangular shape with the recess not extending over the outer corners of the top surface. The road safety equipment battery having a rectangular shape may for example provide stability and or stackability.

According to an embodiment, the battery, with the exception from the first and second electric terminals, is fourfold rotation symmetric around an axis extending from a centre of the top surface to a centre of the bottom surface. Thereby, the user may insert the road safety equipment battery into the charger for charging, without the concern of the battery being wrongly oriented along its longitudinal axis. This may be particularly useful when a user is to fit the battery into the charger during harsh weather condition and limited lighting, where it may be difficult to distinguish a correct orientation of said battery.

According to a second aspect of the present disclosure, there is provided a charger configured to charge a road safety equipment battery. The charger comprises a roof portion having a lower surface, wherein, in a state of use of the charger, the roof portion extends along a horizontal plane and the lower surface is facing a first direction, the first direction being perpendicular to the horizontal plane and directed downwards. The charger further comprises a rear wall connected to the roof portion and extending along the first direction. The charger further comprises a first charging terminal arranged at the lower surface of the roof portion, and a second charging terminal arranged at the lower surface of the roof portion. The first and second charging terminals being configured to engage with electric terminals of the road safety equipment battery. The charger further comprises a first retaining portion arranged to horizontally retain the road safety equipment battery at the charger, a second retaining portion arranged to vertically retain the road safety equipment battery at the charger. The first retaining portion comprises a protrusion arranged at the lower surface and protruding away from said lower surface in the first direction. Furthermore, the protrusion is configured to fit into a corresponding recess of a road safety equipment battery when accommodated in the charger. The charger of the present disclosure is arranged to recharge road safety equipment batteries. The first and second charging terminal being positioned on the lower surface of the roof portion may advantageously protect them from dirt or other pollutants. This may be particularly advantageous as grinding dust or similar are often accumulated in the environment where the charger may be used, such as rental depots for road safety equipment. Such pollutants may otherwise contaminate the charging terminals reducing the charger's capacity to charge a rechargeable battery, or even risk a short circuit. The term state of use may refer to the condition of which the charger is intended to be operated. Furthermore, the charger being provided with a first retaining portion and a second retaining portion may provide the charger with simple and efficient means of enabling a user to easily insert or remove a road safety equipment battery from the charger. The first retaining portion, in the state of use, may only retain a road safety equipment battery in the horizontal direction. The second retaining portion, in the state of use, may only retain the road safety equipment battery in the vertical direction. As of this, a road safety equipment battery may be enabled to be securely fitted into the charger by a rotational movement relative to the charger. Similarly, the road safety equipment battery may be enabled to be removed from the charger by a rotational movement relative to the charger. The road safety equipment battery being able to be inserted or removed by a rotational movement, while being retained in the charger when exposed to direct vertical and horizontal force, may be advantageous for enabling users to easily insert or remove a road safety equipment battery in relation to the charger, while preventing it from accidentally falling out, for example due to gravity. The charger having a protrusion may advantageously provide the charger with the ability to only enable a rechargeable road safety equipment battery with a corresponding recess to be fitted into the charger and charged. Thus, mitigating the risk of a user inserting a conventional road safety equipment battery into the charger by mistake. The protrusion may advantageously be provided on the same lower surface as the first and second charging terminals to instantly prevent a conventional battery from engaging to the lower surface and risk damaging the charging terminals.

According to an embodiment, the first retaining portion is connected to the roof portion and extending away from the roof portion along the first direction. In the state of use, this provides for an efficient mean to retain a road safety equipment battery in a horizontal direction. The first retaining portion may advantageously retain the road safety equipment battery only in the horizontal direction for promoting an easy insertion or removal of the road safety equipment battery by a rotational movement.

According to an embodiment, the second retaining portion is connected to the rear wall and extends away from the rear wall in parallel to the horizontal plane. This provides for an efficient means to retain the road safety equipment battery in the vertical direction. The second retaining portion may advantageously retain the road safety equipment battery only in the vertical direction for promoting an easy insertion or removal of the road safety equipment battery from a rotational movement. The rotational movement may advantageously be a rotational movement in the vertical direction.

According to an embodiment, the second retaining portion comprises a protruding heel protruding away from the second retaining portion in a second direction which is opposite the first direction. As of this, the protruding heel, arranged on the second retaining portion, may provide a relatively small retaining force in the horizontal direction on a road safety equipment battery which is fitted in the charger. This may be advantageous for mitigating that battery may accidentally be dismounted from the charger. From this, a user may have to apply a small initial force to generate a rotational movement so to remove the battery.

Furthermore, the protruding heel may require a user to, at the end of the rotating movement for inserting the road safety equipment battery in the charger, apply an additional force in the horizontal direction so that a portion of the battery moves past the protruding heel. This may provide the benefit of the user sensing when the road safety equipment battery is properly inserted into the charger.

According to an embodiment, the charger further comprises an outer charging terminal arrangement comprising the second charging terminal, wherein the outer charging terminal arrangement is arranged to provide a charging spot at each corner of a square shape extending along the lower surface around the first charging terminal. From this, the charger may be able to charge the battery, regardless of a road safety equipment battery's orientation along its longitudinal axis.

According to a third aspect of the present disclosure there is provided a system comprising a road safety equipment battery as disclosed herein and a charger as disclosed herein. The road safety equipment battery is configured to be accommodated in the charger for charging the rechargeable cell, and, in the state of use of the system, the road safety equipment battery is configured to be releasably fastened in the charger by a rotational movement of the road safety equipment battery in relation to the charger. As of this, there is provided a system inherited with the advantages as discussed herein relating to the first and or the second aspect of the present disclosure.

According to a fourth aspect of the present disclosure, there is provided a charging board comprising a board element, and a plurality of chargers as disclosed herein. In state of use of the charging board, at least one charger of the plurality of chargers is attached on the board element so that that the roof portion extends along a horizontal plane. It is conceivable that more than one charger is attached on the board element so that that the roof portion extends along a horizontal plane. In a preferred embodiment, the plurality of chargers is attached on the board element so that that the roof portion of each charger extends along a horizontal plane.

According to an alternate embodiment, the board element extends along a second plane, and at least one of the plurality of chargers is releasably attachable to the board element by means of a movement of the charger, in relation to the board element, along an intersection line of the second plane and the horizontal plane. As of this, at least one charger is attachable to the charging board a movement which is lateral to an insertion and removal direction of the road safety equipment battery into the charger. This may reduce the risk of a user accidentally causing a charger to de-attach from the charging board when inserting or removing a road safety equipment battery from the charger.

According to an embodiment, each of the plurality of chargers are releasably attached to the board element by a snap-fit design. Thus, the board provides for an efficient operation of releasably attaching a charger to the charging board.

According to a fifth aspect of the present disclosure, there is provided a method for releasably fastening a road safety equipment battery in a charger for charging a rechargeable cell of the road safety equipment battery. The method comprises providing a road safety equipment battery comprising a housing having a top surface, wherein the top surface is provided with a first and a second electric terminal and a recess. The method further comprises providing a charger comprising a roof portion having a lower surface provided a protrusion, a first retaining portion arranged to horizontally retain the road safety equipment battery at the charger, and a second retaining portion arranged to vertically retain the road safety equipment battery at the charger. The method further comprises positioning the road safety equipment battery so that the protrusion of the charger is accommodated in the recess of the road safety equipment battery. The method further comprises rotating the road safety equipment battery in relation to the charger so that the first retaining portion horizontally retains the road safety equipment battery at the charger, the second retaining portion vertically retains the road safety equipment battery at the charger, and the roof portion covers the top surface of the road safety equipment battery. This provides for an efficient method for inserting a rechargeable road safety equipment battery into a charger for charging the same. Providing a charger having a protrusion may advantageously prevent conventional non-chargeable road safety equipment batteries from being inserted into the charger. The protrusion may further guide proper insertion/fitting of the road safety equipment battery. Providing a first and second retaining portions, each arranged to retain a battery in a horizontal respective vertical direction may be advantageous for enabling a road safety equipment battery to be inserted into the charger by a rotational movement in relation to the charger. Furthermore, it may be advantageous that the roof portion covers the top surface of the road safety equipment battery when it is inserted into the charger because the charging terminals may be protected against pollutants such as grinding dust. Furthermore, the orientation of the charger may promote that battery is held in place inside the charger by gravity as the gravitational force is pushing it downwards. As the battery is inserted into the charger by a rotational movement and held in placed by the first and second retaining portions, the battery may be prevented from being dismounted due to gravitational force. Meanwhile, a user will easily from generating a rotational movement to remove the battery. Thus, the method may provide for a user to easily insert or remove the road safety equipment battery from the charger, while preventing the battery to accidentally become loose end thereby dismounted, for example due to gravity. This may further provide a reliable method for inserting and removing a battery from a charger without the need for complex moving parts.

According to an embodiment, the first and second electric terminals are electric coil terminals and wherein rotating the road safety equipment battery further comprises compressing the first and second coil terminals and thereby generating a biasing force between the road safety equipment battery and the charger. As of this, the biasing force may help to retain the road safety equipment battery in the charger. The biasing force may increase the frictional force acting between the bottom surface of the road safety equipment battery and the second retaining portion, which may help to reduce the risk of the road safety equipment battery unintentionally being exposed to a rotational movement and thereby being removed from the charger. In addition, the use of a coil terminal, or a spring terminal may further provide a secure and stable electric connection between the road safety equipment battery and the charger.

Effects and features of the second and third and fourth and fifth aspects are largely analogous to those described above in connection with the first aspect. Embodiments mentioned in relation to the first aspect are largely compatible with the second and third and fourth and fifth aspects. It is further noted that the inventive concepts relate to all possible combinations of features unless explicitly stated otherwise.

The invention is defined by the appended independent claims, with embodiments being set forth in the appended dependent claims, in the following description and in the drawings. It is to be understood that this disclosure is not limited to the particular parts of the device described or steps of the methods described as such device and method may vary. It is also to be understood that the terminology used herein is for purpose of describing particular embodiments only and is not intended to be limiting. It must be noted that, as used in the specification and the appended claims, the articles "a", "an", "the", and "said" are intended to mean that there are one or more of the elements unless the context clearly dictates otherwise. Thereby, for example, reference to "a unit" or "the unit" may include several devices, and the like. Furthermore, the words "comprising", "including", "containing" and similar wordings do not exclude other elements or steps.

### BRIEF DESCRIPTION OF THE DRAWINGS

The disclosure is described in the following illustrative and non-limiting detailed description of exemplary embodiments, with reference to the appended drawings, wherein:
Fig. 1 is a perspective view of a road safety equipment battery according to an exemplifying embodiment of the present disclosure.
Fig. 2 is a plan view (top view) showing the road safety equipment battery of Fig. 1.
Fig. 3 is a sectional view taken along a section line A-A of Fig. 1.
Fig. 4 is a perspective view showing a charger according to an exemplifying embodiment of the present disclosure.
Fig. 5 is a plan view (top view) showing the charger of Fig. 4.
Fig. 6 is a plan view (bottom view) showing the charger of Fig. 4.
Fig. 7 is sectional view taken along the section line B-B of Fig. 4.
Fig. 8 is a perspective view showing a system comprising a charger and a road safety equipment battery according to an exemplifying embodiment of the present disclosure.
Fig. 9 is a sectional view taken along the section line C-C of Fig. 8.
Fig. 10 is a perspective view showing a system comprising a charging board and a plurality of chargers of Fig. 4.
Fig. 11a is a sectional view taken along the section line C-C of Fig. 8 showing the road safety equipment battery in an unfitted position in relation to the charger.

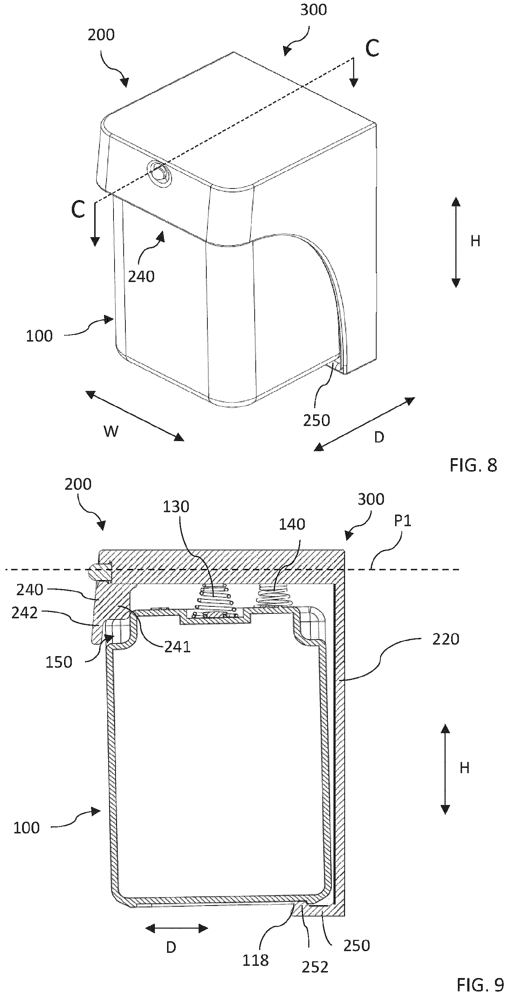

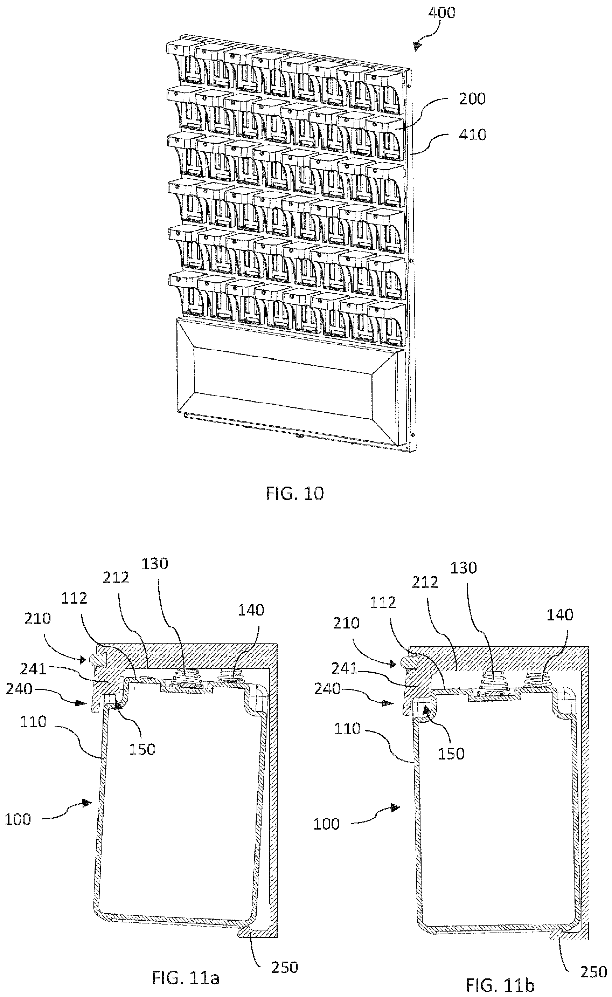

Fig. 11 b is a sectional view taken along the section line C-C of Fig. 8 showing the road safety equipment battery in a fitted position in the charger.

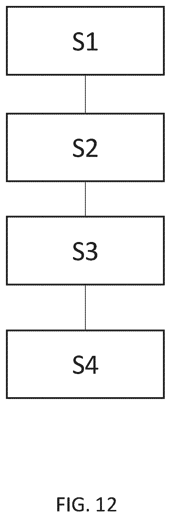

Fig. 12 is a schematic flow chart of a method of the present disclosure.

### DETAILED DESCRIPTION OF EMBODIMENTS

Hereinafter, the present disclosure in various aspects will be described with reference to the illustrative drawings. All figures are schematic, not necessarily to scale, and generally only show parts which are necessary to elucidate the disclosure, wherein other parts may be omitted or merely suggested. Throughout the figures the same reference signs designate the same, or essentially the same features. Various elements and arrangements are schematically depicted in the drawings for purposes of explanation only and to not obscure the description with details that are well known to those skilled in the art. Nevertheless, the attached drawings are included to describe and explain illustrative examples of the disclosed subject matter.

The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

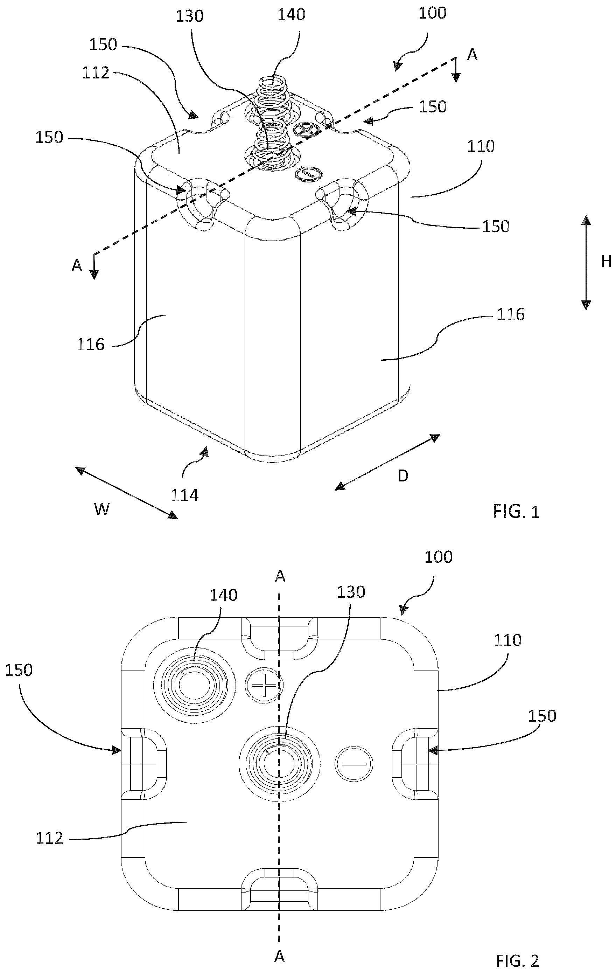

Fig. 1 shows a first aspect of the present disclosure. A first exemplary embodiment of a road safety equipment battery 100 is shown. The road safety equipment battery 100 is rechargeable and configured to be charged by a charger. The charger may be a corresponding charger arranged to charge the road safety equipment battery 100. The road safety equipment battery 100 comprises a housing 110 having a top surface 112, a bottom surface 114, and side surfaces 116. In the shown embodiment, the housing 110 has a rectangular prism shape with opposite surfaces equal in size. The housing 110 has a hight H, a width W and a depth D. The road safety equipment battery 100 may be of the type 4R25 6V battery. The housing 110 may be approximately 99 mm in height, 66 mm in width, and 66 mm in depth. It may have alternative dimensions. The top surface 112 and the bottom surface 114 are opposite to each other and are each having a quadratic surface area. The housing 110 comprises four side surfaces each having a rectangular surface area. The edges of the housing 110 are rounded. It is conceivable that the housing 110 has an alternative shape such as a square volume, or a cylinder. It is conceivable that the housing may have a cloverleaf cross section. The housing 110 is made of a plastic material. Alternatively, the housing 110 may be made of another durable material like metal. The housing 110 may advantageously protect internal components from physical damage and environmental elements so to ensure safe handling.

Fig. 2 is a top view of the road safety equipment battery 100 and a sectional line A-A extends along the depth D and the heigh H of the road safety equipment battery 100. The sectional cut A-A is centrally arranged on the road safety equipment battery 100 in the direction of the width W.

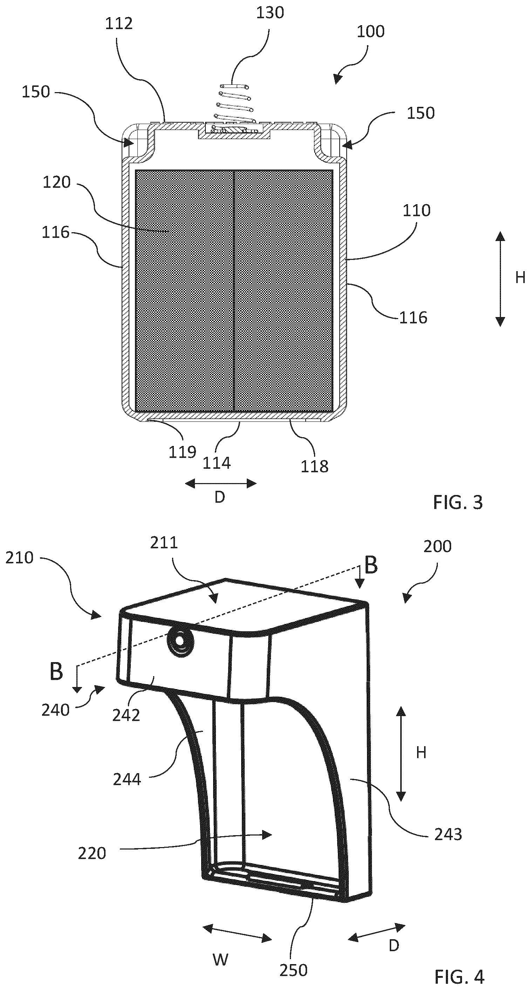

As shown in Fig. 3, which is a view along the sectional line A-A, the road safety equipment battery 100 further comprises a rechargeable cell 120 enclosed by the housing 110. The rechargeable cell 120 may be an electrochemical cell that can be recharged and used multiple times. The rechargeable cell 120 may comprise one or more electrochemical cells with components such as an anode, a cathode, an electrolyte, and a separator. In the shown embodiment, the road safety equipment battery 100 comprises multiple rechargeable cells 120 arranged in series to achieve a desired 6-volt output.

Again, with reference to Fig. 1, the road safety equipment battery 100 further comprises a first electric terminal 130 arranged at the top surface 112 and a second electric terminal 140 arranged at the top surface 112. The first electric terminal 130 is arranged at a centre of the top surface 112. The second electric terminal 140 is arranged away from the first electric terminal 130 such that it does not touch it. The second electric terminal 140 is arranged away from the first terminal 130 towards a corner of the top surface 112. In the shown embodiment, each of the first electric terminal 130 and the second electric terminal 140 is a coil spring terminal. Alternatively, they may be screw-terminals. The coil spring terminals may have a hight of approximately 16 mm. The first electric terminal 130 and the second electric terminal 140 are configured to receive electrical power from a charger and transfer the electrical power to the rechargeable cell 120 for charging the same. The first electrical terminal 130 may be a negative electric terminal. The second electric terminal 140 may be a positive electric terminal. The first and second electrical terminals 130, 140 may be connected to the one or more rechargeable cells inside the road safety equipment battery 100 to enable a flow of electricity to and from the road safety equipment battery 100. The positive electric terminal may be connected to a positive end of the one or more rechargeable cell, and the negative electric terminal may be connected to the negative end of the one or more rechargeable cells. The first and second electric terminals 130, 140 may be made from conductive materials, such as metal. This may ensure efficient electrical connectivity. The design of the first and second electric terminals 130, 140 may ensure that when road safety equipment are connected to the road safety equipment battery 100, electricity can flow from the rechargeable cells through the first and second terminals 130, 140 to power said road safety equipment, and during recharging, electricity can flow into the rechargeable cells to restore their energy. The road safety equipment battery 100 further comprises a recess 150 arranged at an edge portion of the top surface 112. The recess 150 is configured to accommodate a corresponding protrusion of a charger 200. The recess 150 may be an indented or hollowed-out area on the top surface 112 which may be specifically designed to fit or receive a projecting part from a corresponding charger. The dimensions and shape of the recess 150 may preferably be shaped to match those of the corresponding protrusion. This may advantageously enable the road safety equipment battery 100 to be inserted into a charger having a corresponding prostitution, while a conventional non-rechargeable battery will be prevented from being inserted. By a conventional non-rechargeable battery, it may be meant a standard non-rechargeable 4R25 battery for road safety equipment.

The recess 150 extends over a portion of the top surface 112 and a portion of one of the side surfaces 116. Alternatively, the recess 150 may be arranged to extend only on the top surface 112. The recess 150 is open at an edge of the top surface 112 and extends in-between two adjacent ends of the top surface 112. This may refer to that the recess 150 extends along the edge running between two adjacent ends of the top surface 112 excluding said adjacent ends. Alternatively, the recess 150 may be defined as a portion which is set lower than the surrounding top surface 112, creating a depression or cavity extending from one end of the top surface 112 to an adjacent end of the top surface 112, creating a step like structure. In this embodiment, the recess 150 may have a stepped shape, such to form a level that descends from a centred surface at the top surface 112.

In the shown embodiment, the battery 100, with the exception from the first and second electric terminals 130, 140, is fourfold rotation symmetric around an axis extending from a centre of the top surface 112 to a centre of the bottom surface 114. Thereby, the road safety equipment battery 100 comprises four recesses 150, one positioned on each side edge of the top surface 112. In other words, the housing 110 is rotation symmetric. It is conceivable that the road safety equipment battery 100 according to alternate embodiments comprises another number of recesses, for example one, two or three.

Now with reference to Fig. 3. The housing 110 has a rectangular cross section. The rechargeable cell 120 is arranged within the housing 110. In this embodiment, the road safety equipment battery 100 comprises four rechargeable cells 120 coupled in series. Each rechargeable cell 120 may have a cylindric shape.

The recess 150 may extend over the top surface 112 and one of the side surfaces 116 such to not invade a space inside the housing 110 occupied by the rechargeable cells 120.

In this embodiment, the bottom surface 114 comprises a quadratic bottom recess 118. The bottom recess 118 may be designed to interact with a protruding heel of a charger for indicating that the road safety equipment battery 100 is properly fitted inside the charger. The bottom recess 118 may be relatively shallow, preferably around 1-5 mm in depth, and extend from a centre of the bottom surface 114 towards its outer edges. A surface of the housing 110 may seamlessly extend over the edge between the side surface 116 and the bottom surface 114 in a rounded manner until reaching the bottom recess 118. A rim 119 extends around the recess 118, wherein the rim has a steep inner wall constituting a transfer between the rounded surface and the bottom recess 118. This may provide a smooth insertion of the road safety equipment battery 100 when fitted into a charger as a protruding heel of the charger may seamlessly slide into the bottom recess 118. Thereafter, the protruding heel of the charger may engage with the steep wall of the rim 119 preventing the road safety equipment battery 100 from falling out of place and becoming dismounted.

Now with reference to Figs. 4-7, a second aspect of the present disclosure is presented. A first exemplary embodiment of a charger 200 configured to charge a road safety equipment battery is shown. The charger 200 has a height H, a width W and a depth D. In a state of use, the charger 200 is arranged to be positioned so that its height H extends along a vertical direction. The width W and the depth D of the charger 200 are perpendicular to each other and to the height H of the charger 200.

The charger 200 comprises a roof portion 210. The roof portion comprises an upper surface 211 which, in the state of use of the charger 200, faces an upward direction. The roof portion 210 further comprises a lower surface 212 at an opposite side of the roof portion 210 as the upper surface 211. The lower surface 212 faces in the opposite direction as the upper surface 211. The lower surface 212 may be a planar rectangular surface having an outer edge, an inner edge, and a first and a second lateral edge. In a state of use of the charger 200, the roof portion 210 extends along a horizontal plane P1. The horizontal plane P1 extends along the width W and the depth D of the charger 200. The lower surface 212 is facing a first direction D1, the first direction D1 being perpendicular to the horizontal plane P1 and directed downwards. A second direction D2 is defined as a direction which is opposite to the first direction D1.

The charger 200 further comprises a rear wall 220. The rear wall 220 is connected to the roof portion 210 and extends along the first direction D1. The rear wall 220 has a longitudinal extension along the height H of the charger 200 from an upper end 221 to a lower end 222. The rear wall 220 may have a rectangular wall-like shape, with a lateral extension in the direction of the width of the charger 200.

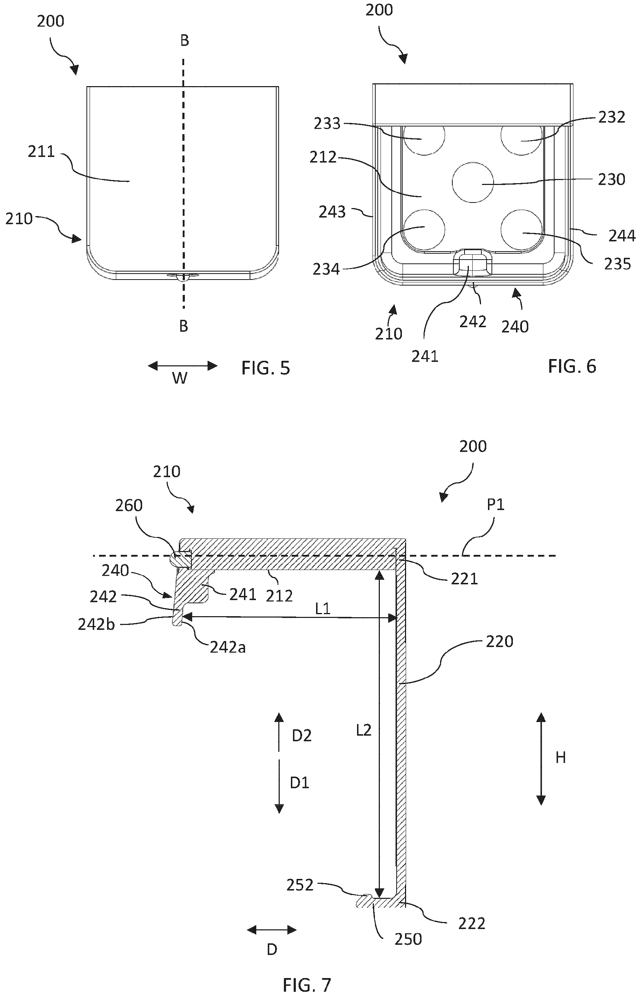

The charger 200 further comprises a first retaining portion 240 connected to the roof portion 210 and a second retaining portion 250 connected to the rear wall 220. The first retaining portion 240 is arranged to horizontally retain the road safety equipment battery at the charger 200. The first retaining portion 240 extends away from the roof portion 210 along the first direction D1. The first retaining portion 240 comprises a front wall 242. The front wall 242 may be expressed as a projecting part which extends along the outer edge of the lower surface 212 of the roof portion 210. The front wall 242 provides an interior surface 242a facing in the direction towards the rear wall 220 and an exterior surface 242b facing away from the rear wall 220. The front wall 242 may extend downwards and outwardly away from the rear wall 220. The first retaining portion 240 further comprises a first side wall 243 and a second side wall 244. The first and second side walls 243, 244, extends from the roof portion 210 and tapering downwards along the lateral ends of the rear wall 220. The first retaining portion 240, in the state of use of the charger 200, is designed to only prevent horizontal displacement of a road safety equipment battery which is inserted into the charger 200. As shown in Figs. 4 and 6, the first retaining portion 240 may extend along the outer edge, and the first and second lateral edges of the lower surface 212 of the roof portion 210. The rear wall 220 extends along the inner edge of the lower surface 212. The first retaining portion 240, in combination with the rear wall 220, may retain a road safety equipment battery which is inserted into the charger 200 from being displaced in all horizontal directions. The second retaining portion 250 is arranged to vertically retain the road safety equipment battery at the charger 200. In the shown embodiment, the second retaining portion 250 is connected to the rear wall 220 at the lower end 222 thereof and is extending away from the rear wall 220 in parallel to the horizontal plane P1. The second retaining portion 250 extends away from lower end 222 of the rear wall 220 in the direction of the depth D of the charger 200. The second retaining portion 250 is arranged to retain a road safety equipment battery inserted into the charger 200 in the vertical direction, thus preventing the battery from falling downwards.

The charger 200 further comprises a first and a second charging terminal 230, 232 at the lower surface 212 of the roof portion 210. The first charging terminal 230 may be centrally arranged at the lower surface 212. Furthermore, the second charging terminal 232 is arranged at the lower surface 212 of the roof portion 210. The first and second charging terminals 230, 232 are being configured to engage with electric terminals of a road safety equipment battery for charging the same. The charger 200 may be configured to charge a rechargeable 4R25 6V battery. The charger 200 is arranged to charge a road safety equipment battery by that the road safety equipment battery is inserted into the charger 200 so that electric terminals of the road safety equipment battery engage with the first and second charging terminals 230, 232. The charger 200 is arranged to charge a road safety equipment battery by that the road safety equipment battery is inserted between the lower surface 212 of the roof portion 210, the rear wall 220, the first retaining portion 240 and the second retaining portion 250. The charger 200 further comprises an outer charging terminal arrangement comprising at least the second charging terminal 232. The outer charging terminal arrangement is arranged to provide a charging spot at each corner of an outer square shape extending along the lower surface 212 around the first charging terminal 230. In the shown embodiment, the outer charging terminal arrangement comprises four charging terminals. More specifically, the charging terminal arrangement comprises the second charging terminal 232, a third charging terminal 233, a fourth charging terminal 234, and a fifth charging terminal 235. The in total five charging terminals are arranged in a quincunx pattern. As of this, a road safety equipment battery having a first and a second electric terminals may be inserted into the charger 200 for being charged at four different positions. It is conceivable that the charger 200 only comprises a first and a second charging terminal. In an alternate embodiment, the charger may comprise a first charging terminal in the centre of the lower surface 212 and an outer charging terminal arrangement comprising a second and a third charging terminal. In this embodiment, each of the second and third charging terminals may be elongated so to each provide charging spots at two adjacent corners of a squared shape. From this, five charging spots in a quincunx pattern may be provided. In an alternate embodiment, it is conceivable that a first charging terminal provides a central charging spot, and a second charging terminal is square-shaped, extending around the first charging terminal, and thus provides charging spots at edges of a square extending around the first charging terminal. The section line B-B in Figs. 5-6 extends in the vertical direction along the height H and the depth D of the charger 200. The section line B-B extends along a centre of the charger 200 in the direction of its width W.

Fig. 7 is a sectional view taken along the section line B-B. A first length L1, is defined as the distance along the depth D, from the rear wall 220 of the charger 200 to the first retaining portion 240. A second length L2, is defined as the distance along the height H, from the lower surface 212 to the second retaining portion 250. The front wall 242 of the first retaining portion 240 extends outward from the lower surface 212, with its length preferably being less than half of the second length L2, more preferably less than a third of the second length L2, and most preferably less than a fifth of the second length L2. The second retaining portion 250 extends outward from the rear wall 220, with its length preferably being less than half of the first length L1, more preferably less than a third of the first length L1, and most preferably less than a fifth of the first length L1. In the shown embodiment, the second retaining portion 250 comprises a protruding heel 252 protruding away from the second retaining portion 250 in a second direction D2 which is opposite the first direction D1. The protruding heel 252 may preferably protrude away from the second retaining portion 250 along the height H by approximately 2 mm. The first retaining portion 240 further comprises a protrusion 241 arranged at the lower surface 212. The protrusion 241 protrudes away from said lower surface 212 in the first direction D1. In this embodiment, the protrusion is centrally arranged at an outer edge portion of the lower surface 212. The protrusion 241 extends from the lower surface 212 and from the first retaining portion 240. The protrusion 241 may only extend from the lower surface 212. The protrusion 241 may only extend from the first retaining portion 240. In this embodiment the protrusion 241 is integral with the front wall 242, as shown in Fig. 7. However, alternatively the protrusion 241 may be separate from the front wall 242. The protrusion 241 is configured to fit into a corresponding recess of a road safety equipment battery when accommodated in the charger 200. The protrusion 241 extends downwardly from the lower surface 212 so to prevent a conventional road safety equipment battery having a rectangular prism shape, without any recess, from being inserted into the charger. The protrusion 241 may prevent a conventional road safety equipment battery from being inserted in the charger 200 by blocking it. The charger 200 further comprises a lamp 260 for indicating charging status of a road safety equipment battery being charged in the charger 200. The lamp 260 may be a LED.

Now with reference to Fig. 8 a third aspect of the present disclosure is shown. A system 300 comprising a road safety equipment battery 100 as disclosed herein, and a charger 200 as disclosed herein. The road safety equipment battery 100 is configured to be inserted into the charger 200 for charging the rechargeable cell 120. In the state of use of the system 300, the road safety equipment battery 100 is configured to be releasably fastened in the charger 200 by a rotational movement of the road safety equipment battery 100 in relation to the charger 200. In the shown embodiment, the rotational movement is a vertical rotation. More specifically it is a rotational movement around an axis along the width W of the charger 200. The system 300 extends along a height H, a width W, and a depth D.

Fig. 9 is a view taken along the sectional line C-C on Fig. 8. The sectional line C-C extends along the height H and the depth D in the centre of the system 300 in the direction of the width W. The road safety equipment battery 100 is inserted into the charger 200 so that the first and second electric terminals 130, 140 engage with the first and second charging terminals of the charger 200. The first retaining portion 240 retains the road safety equipment battery 100 in a horizontal direction. The second retaining portion retains the road safety equipment battery 100 in a vertical direction. The first and second electric terminals 130, 140 are coil terminals and are compressed when the road safety equipment battery 100 is inserted into the charger 200. As the coil terminals are compressed, they generate a biasing force securing the road safety equipment battery 100 in the charger 200. The protrusion 241 of the charger 200 is accommodated in the recess 150 of the road safety equipment battery 100. The protruding heel 252 engages with the bottom recess 118 of the road safety equipment battery 100.

Fig. 10 shows a fourth aspect of the present disclosure. Fig. 10 shows a charging board 400 comprising a board element 410 and a plurality of chargers 200 as disclosed herein. The board element 410 may be constructed from a durable material, for example plastic or metal. The board element 410 may comprise a plurality of attachment points where a charger 200 as disclosed herein may be attached. Each attachment point may include alignment guides or locking mechanisms to ensure that the chargers 200 are correctly oriented for optimal charging efficiency. In the shown embodiment, each charger 200 is connected to the charging board 400 using a snap-fit design. More specifically, a charger 200 may comprise a fastening mechanism such as hooks, which can interlock with the board element when pressed or "snapped" together. The board may include integrated cable management solutions, such as channels or clips, to organize and secure charging cables. This design may allow a user to easily replace a charger 200 in case of malfunctioning. In the state of use of the charging board 400, each of the plurality of the chargers 200 is attachable on the board element 410 so that that the roof portion 210 extends along a horizontal plane. This may be done by that the charging board 400 is arranged to stand upright so that it extends in a vertical direction and each charger 200 is arranged to attach to the board element 410 such that the longitudinal extension of the roof portion of each charger 200 extends perpendicularly away from the surface of the charging board 400. As of this, the roof portion 210 of each charger may protect the conductive part of the charger 210 as well as the road safety equipment battery fitted into said charger 200 from dust and other pollutants.

Now with reference to Figs. 11a, 11b, and 12, in accordance with a fifth aspect of the present disclosure, there is provided a method for releasably fastening a road safety equipment battery 100 in a charger 200 for charging a rechargeable cell 120 of the road safety equipment battery 100. The method comprises providing S1 a road safety equipment battery 100 comprising a housing 110 having a top surface 112, wherein the top surface 112 is provided with a first and a second electric terminal 130, 140, and a recess 150. The method further comprises providing S2 a charger 200 comprising a roof portion 210 having a lower surface 212 provided with a protrusion 241, a first retaining portion 240 arranged to horizontally retain the road safety equipment battery 100 at the charger 200, and a second retaining portion 250 arranged to vertically retain the road safety equipment battery 100 at the charger 200. The method further comprises positioning S3 the road safety equipment battery 100 so that the protrusion 241 of the charger 200 is accommodated in the recess 150 of the road safety equipment battery 100. The method further comprises rotating S3 the road safety equipment battery 100 in relation to the charger 200 so that: the first retaining portion 240 horizontally retains the road safety equipment battery at the charger 200, the second retaining portion 250 vertically retains the road safety equipment battery at the charger, and so that the roof portion 210 covers the top surface 112 of the road safety equipment battery 100. It may be expressed as the road safety equipment battery 100 is movable relative to the charger 200 between an unfitted position and a fitted position. In the unfitted position, the road safety equipment battery 100 is placed, but not yet inserted, into the charger 200, allowing for relative movement. In the fitted position, the road safety equipment battery 100 is properly inserted and securely engaged, ready for charging. In the unfitted position, the road safety equipment battery is inclined and the protrusion 241 of the charger 200 is accommodated in the recess 150 of the road safety equipment battery 100. Thus, a conventional road safety equipment battery not having a recess with a similar shape as the road safety equipment battery 100 of the present disclosure may not be able to be moved into the unfitted position. The road safety equipment battery 100 is moved from the unfitted position into the fitted position by a rotational movement relative the charger 200. The rotational movement may be described as a rotation around the width W of the charger 200 such that the bottom end of the road safety equipment battery approaches the rear wall 220. This rotational movement enables the second retaining portion 250 to vertically retain the road safety equipment battery 100. Furthermore, by rotating the road safety equipment battery 100 from the unfitted position into the fitted position, the protruding heel 252 of the charger 200 may enter the bottom recess 118, which may further secure the road safety equipment battery 100 in the fitted position.

According to an embodiment, the first and second electric terminals 130, 140 are electric coil terminals and the operation of rotating S4 the road safety equipment battery 100 further comprises compressing the first and second electric terminals 130, 140 and thereby generating a biasing force between the road safety equipment battery 100 and the charger 200. This biasing force may increase the frictional force between the bottom surface 114 of the road safety equipment battery 100 and the second retaining portion 250 of the charger 200. This may further secure the road safety equipment battery 100 in its fitted position in the charger 200.

In the drawings and description, there have been disclosed preferred embodiments and examples of the disclosure and, although specific terms are employed, they are used in a generic and descriptive sense only and not for the purpose of limitation, the scope of the invention being set forth in the following claims. The present disclosure has mainly been described above with reference to a few embodiments. However, as is readily appreciated by a person skilled in the art, other embodiments than the ones disclosed above are equally possible within the scope of the present disclosure, as defined by the appended claims. Although features and elements are described above in particular combinations, each feature or element can be used alone without the other features and elements or in various combinations with or without other features and elements. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain features are recited in mutually different dependent claims does not indicate that a combination of these features cannot be used to advantage. Any reference signs in the claims should not be construed as limiting the scope.

## Claims

1. A road safety equipment battery (100) which is rechargeable and configured to be charged by a charger, the road safety equipment battery (100) comprising:
a housing (110) having a top surface (112), a bottom surface (114), and side surfaces (116),
a rechargeable cell (120) enclosed by the housing (110),
a first electric terminal (130) arranged at the top surface (112),
a second electric terminal (140) arranged at the top surface (112),
a recess (150) arranged at an edge portion of the top surface (112), wherein the recess (150) is configured to accommodate a corresponding protrusion of a charger (200).

2. A road safety equipment battery (100) according to claim 1, wherein the first electric terminal (130) and the second electric terminal (140) are configured to receive electrical power from the charger (200) and transfer the electrical power to the rechargeable cell (120) for charging the same.

3. A road safety equipment battery (100) according to any preceding claim, wherein each of the first electric terminal (130) and the second electric terminal (140) is a coil spring terminal.

4. A road safety equipment battery (100) according to any preceding claim, wherein the recess (150) extends over a portion of the top surface (112) and a portion of one of the side surfaces (116).

5. A road safety battery (100) according to any preceding claim, wherein the recess (150) is open at an edge of the top surface (112) and extends in-between two adjacent ends of the top surface (112).

6. A road safety equipment battery (100) according to any preceding claim, wherein the battery (100), with the exception from the first and second electric terminals (130, 140), is fourfold rotation symmetric around an axis extending from a centre of the top surface (112) to a centre of the bottom surface (114).

7. A charger (200) configured to charge a road safety equipment battery, the charger (200) comprising:
a roof portion (210) having a lower surface (212), wherein, in a state of use of the charger (200), the roof portion (210) extends along a horizontal plane (P1) and the lower surface (212) is facing a first direction (D1), the first direction (D1) being perpendicular to the horizontal plane (P1) and directed downwards;
a rear wall (220) connected to the roof portion (210) and extending along the first direction (D1);
a first charging terminal (230) arranged at the lower surface (212) of the roof portion (210);
a second charging terminal (232) arranged at the lower surface (212) of the roof portion (210);
the first and second charging terminals (230, 232) being configured to engage with electric terminals of the road safety equipment battery;
a first retaining portion (240) arranged to horizontally retain the road safety equipment battery at the charger (200);
a second retaining portion (250) arranged to vertically retain the road safety equipment battery at the charger (200);
wherein the first retaining portion (240) comprises a protrusion (241) arranged at the lower surface (212) and protruding away from said lower surface (212) in the first direction (D1),
wherein the protrusion (241) is configured to fit into a corresponding recess of a road safety equipment battery (100) when accommodated in the charger (200).

8. A charger according to claim 7, wherein the first retaining portion (240) is connected to the roof portion (210) and extending away from the roof portion (210) along the first direction (D1).

9. A charger according to any one of claims 6-8, wherein the second retaining portion (250) is connected to the rear wall (220) and extending away from the rear wall (220) in parallel to the horizontal plane (P1).

10. A charger (200) according to any one of claims 7-9, wherein the second retaining portion (250) comprises a protruding heel (252) protruding away from the second retaining portion (250) in a second direction (D2) which is opposite the first direction (D1).

11. A charger (200) according to any one of claims 7-10, further comprising an outer charging terminal arrangement comprising the second charging terminal (232), wherein the outer charging terminal arrangement is arranged to provide a charging spot at each corner of a square shape extending along the lower surface (212) around the first charging terminal (230).

12. A system (300) comprising a road safety equipment battery (100) according to any one of claims 1-6 and a charger according to any one of claims 7-11,
wherein the road safety equipment battery (100) is configured to be accommodated in the charger (200) for charging the rechargeable cell (120), and
wherein, in the state of use of the system (300), the road safety equipment battery (100) is configured to be releasably fastened in the charger (200) by a rotational movement of the road safety equipment battery (100) in relation to the charger (200).

13. A charging board (400) comprising:
a board element (410);
a plurality of chargers (200) according to any one of claims 7-11, wherein, in state of use of the charging board (400), at least one of the plurality of chargers (200) is attached on the board element (410) so that that the roof portion (210) extends along a horizontal plane (P1).

14. A method for releasably fastening a road safety equipment battery (100) in a charger (200) for charging a rechargeable cell (120) of the road safety equipment battery (100), the method comprising:
i. providing (S1) a road safety equipment battery (100) comprising a housing (110) having a top surface (112), wherein the top surface (112) is provided with a first and a second electric terminal (130, 140) and a recess (150),
ii. providing (S2) a charger (200) comprising a roof portion (210) having a lower surface (212) provided with a protrusion (241), a first retaining portion (240) arranged to horizontally retain the road safety equipment battery (100) at the charger (200), and a second retaining portion (250) arranged to vertically retain the road safety equipment battery (100) at the charger (200),
iii. positioning (S3) the road safety equipment battery (100) so that the protrusion (241) of the charger (200) is accommodated in the recess (150) of the road safety equipment battery (100),
iv. rotating (S4) the road safety equipment battery (100) in relation to the charger (200) so that:
i. the first retaining portion (240) horizontally retains the road safety equipment battery at the charger (200),
ii. the second retaining portion (250) vertically retains the road safety equipment battery at the charger, and
iii. the roof portion (210) covers the top surface (112) of the road safety equipment battery (100).

15. The method according to claim 14, wherein the first and second electric terminals (130, 140) are electric coil terminals and wherein rotating the road safety equipment battery (100) further comprises compressing the first and second electric terminals (130, 140) and thereby generating a biasing force between the road safety equipment battery (100) and the charger (200).
